**Europäisches Patentamt**

(19) **European Patent Office**

**Office européen des brevets**

(11) Veröffentlichungsnummer: **0 148 289**
**B1**

(12) **EUROPÄISCHE PATENTSCHRIFT**

(51) Int. Cl.⁴: **E 04 B 5/52,** B 01 D 45/06, F 24 C 15/20

(45) Veröffentlichungstag der Patentschrift:
03.02.88

(21) Anmeldenummer: **83810612.8**

(22) Anmeldetag: **22.12.83**

(54) Filterunterdecke zum Ausscheiden und Niederschlagen von Schwebestoffen aus aufsteigender Abluft.

---

(43) Veröffentlichungstag der Anmeldung:
**17.07.85 Patentblatt 85/29**

(45) Bekanntmachung des Hinweises auf die Patenterteilung:
**03.02.88 Patentblatt 88/5**

(84) Benannte Vertragsstaaten:
**AT CH DE LI NL**

(56) Entgegenhaltungen:
**EP-A-0 007 922**
**CH-A-625 035**
**DE-A-2 659 647**
**DE-A-3 145 548**
**DE-B-2 641 708**

(73) Patentinhaber: **Rauch, Heinz, Erlenstrasse 5, CH-2555 Brügg (CH)**

(72) Erfinder: **Braun, Willi, Hans Ed. Schaller Strasse, CH- 3251 Diessbach b/Büren (CH)**

(74) Vertreter: **Tschudi, Lorenz, Bovard AG Patentanwälte VSP Optingenstrasse 16, CH- 3000 Bern 25 (CH)**

EP 0 148 289 B1

LIBER, STOCKHOLM 1988

## Beschreibung

Die Erfindung geht aus von einer aufhängbaren Filterunterdecke zum Ausscheiden und Niederschlagen von Schwebestoffen aus aufsteigender Abluft, mit einander identischen, waagrecht und zueinander parallel verlaufenden, gewölbten Deckenelementen und einander identischen, ebenfalls zueinander parallel, jedoch im Abstand unterhalb von Seitenrandpartien jeweils zweier benachbarter Deckenelemente verlaufenden Auffangrinnen, welche Deckenelemente und Auffangrinnen von Querträgern getragen sind.

Eine solche Filterunterdecke ist in der AT-A-352 959 beschrieben. Mit einer derartigen Filterunterdecke wird versucht, eine möglichst vollständige Abscheidung des Kondensates zu erreichen. Zur Erzielung möglichst vollständiger Kondensation weisen die Seitenrandpartien der Deckenelemente in ihrem Endbereich eine Krümmung nach aussen auf. Die entlang derart gestalteter Deckenelemente zuströmende Abluft bildet eine Wirbel- bzw. Zirkulationsströmung. Es wird angenommen, dass durch eine solche Strömung eine verstärkte Kondensation eintritt.

Als nachteilig wird bei dieser Lösung angesehen, dass die Anzahl der Räume, in welchen Wirbel- bzw. Zirkulationsströmungen der Abluft eintreten zu klein ist, um eine vollständige Kondensation der in der Abluft enthaltenen Schwebestoffe zu erzielen.

In der CH-A-625 035 ist eine Vorrichung zum Be- und Entlüften von Räumen mit feuchter und/oder fetter Atmosphäre beschrieben. Die Unterdecke besteht hier aus im Querschnitt bogenförmigen Kulissen. Die einander benachbarten Kulissen sind jeweils abwechselnd mit ihrer Längsöffnung nach oben und nach unten angeordnet, wobei sie ineinandergreifen. Die Kulissen greifen mit Abstand derart ineinander, dass sich zwischen den Verengungen der Kulissenränder eine den Strömungsquerschnitt erweiternde Kammer bildet. Die Kammern dienen auf dem Weg der Luftströmung als Beruhigungsräume, in denen Verunreinigungen der Abluft leicht ausfallen.

Durch eine solche Gestaltung der Filterunterdecke werden aber höchstens zwei Verdichtungs- und zwei Beruhigungsräume geschaffen, was zu einer vollständigen Abschaffung der Schwebestoffe aus der Abluft nicht ausreichen dürfte.

Der im Patentanspruch 1 angegebenen Erfindung lag die Aufgabe zugrunde, eine aufhängbare Filterunterdecke zum Ausscheiden und Niederschlagen von Schwebestoffen aus aufsteigender Abluft zu schaffen, mit welcher ein viel höherer Grad der Ausscheidung und Niederschlagung von Schwebestoffen erreicht wird als bei den bekannten Filterunterdecken. Desweiteren sollten die Bestandteile der Filterunterdecke einfach und kostensparend herstellbar sein.

Diese Aufgabe wird bei der aufhängbaren Filterunterdecke nach dem Oberbegriff des Patentanspruches 1 durch die Merkmale des kennzeichnenden Teiles des Patentanspruches 1 gelöst.

Mit Vorteil ist in Richtung der Abluftströmung hinter jedem Verdichtungsraum ein Beruhigungsraum gebildet, wobei sich die Volumen der nacheinander folgenden Beruhigungsräume vergrössern.

Es ist weiter von Vorteil, wenn sowohl die Luftableitbleche als auch die Auffangrinnen an Querträgern abnehmbar befestigt sind.

Erfindungsgemäss wird ein Verfahren zur Herstellung der Filterunterdecke dadurch gekennzeichnet, dass die Deckenelemente, die Auffangrinnen und die Luftableitbleche jeweils in einem Arbeitsgang als ein einziges Stück tiefgezogen werden, wobei jeweils ein Loch im Bereich der zu bildenden Seitenrandpartien der Deckenelemente ausgestanzt wird und die Auffangrinnen an ihren Querseiten geschlossen werden.

Der Erfindungsgegenstand wird nachstehend anhand der Zeichnung beispielsweise näher erläutert. Es zeigen

Fig. 1 einen Querschnitt durch die erfindungsgemässe Filterunterdecke, die als Kassettendecke ausgebildet ist,

Fig. 2 eine schematische Darstellung eines Ausschnittes der Filterunterdecke nach der Fig. 1 im Querschnitt,

Fig. 3 einen Schnitt entlang der Linie III-III der Fig. 1,

Fig. 4 eine schematische Darstellung eines Ausschnittes einer anderen Ausführungsform der Filterunterdecke im Querschnitt,

Fig. 5 eine gesprengte Ansicht der Ausführungsform nach der Fig. 4,

Fig. 6 eine schematische Darstellung eines Ausschnittes einer noch weiteren Ausführungsform der Filterdecke im Querschnitt, und

Fig. 7 eine Aufhängung von zwei benachbarten Filterunterdecken im Längsschnitt.

Die in den Figuren dargestellten Filterunterdecken, die an der Decke eines Raumes aufhängbar sind, werden zum Ausscheiden und Niederschlagen von Schwebestoffen aus aufsteigender Abluft z. B in Grossküchen, Schlachthäusern oder bei Grossraum-Farbspritzanlagen verwendet. Die Filterunterdecke kann die Form einer Kassette haben oder nicht als Kassette, sondern bloss als Filterelement verwendet werden.

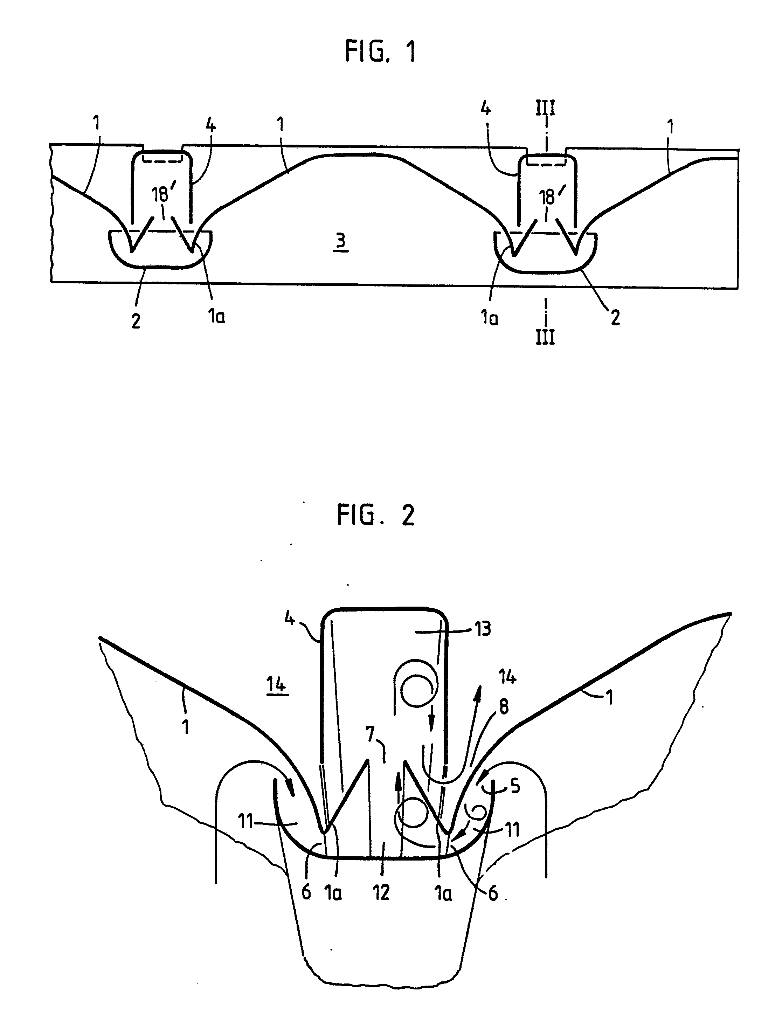

Wie aus den Fig. 1 bis 3 ersichtlich ist, weist die dort dargestellte Filterunterdecke mehrere einander identische, waagrecht und zueinander parallel verlaufende, gewölbte Deckenelemente 1 auf, die aus dünnen Blechprofilen bestehen. Die Deckenelemente sind üblicherweise an den Querträgern 3 angeschweisst. Die Seitenrandpartien 1a jedes Deckenelementes 1 sind im Querschnitt V-förmig gebildet. Das Deckenelement 1 ist so gestaltet, dass die zuströmende Abluft entlang der gewölbten Kontur des Deckenelementes 1 zu seinen Seitenendpartien 1a geführt wird.

Unterhalb von Seitenrandpartien 1a jeweils zweier benachbarter Deckenelemente 1 verlaufen zueinander parallel, einander identische Auffangrinnen 2. Die Auffangrinnen 2 sind ebenfalls von Querträgern 3 getragen, wobei sie auf den Querträgern 3 abnehmbar befestigt sind. Für die Reinigung, z. B. in einer Spülmaschine, können so die Auffangrinnen 2 aus der Filterunterdecke leicht herausgenommen werden. Wie aus den Fig. 1 und 2 ersichtlich ist, umgeben die im Querschnitt U-förmigen Auffangrinnen 2 mit Abstand die Seitenrandpartien 1a der Deckenelemente 1.

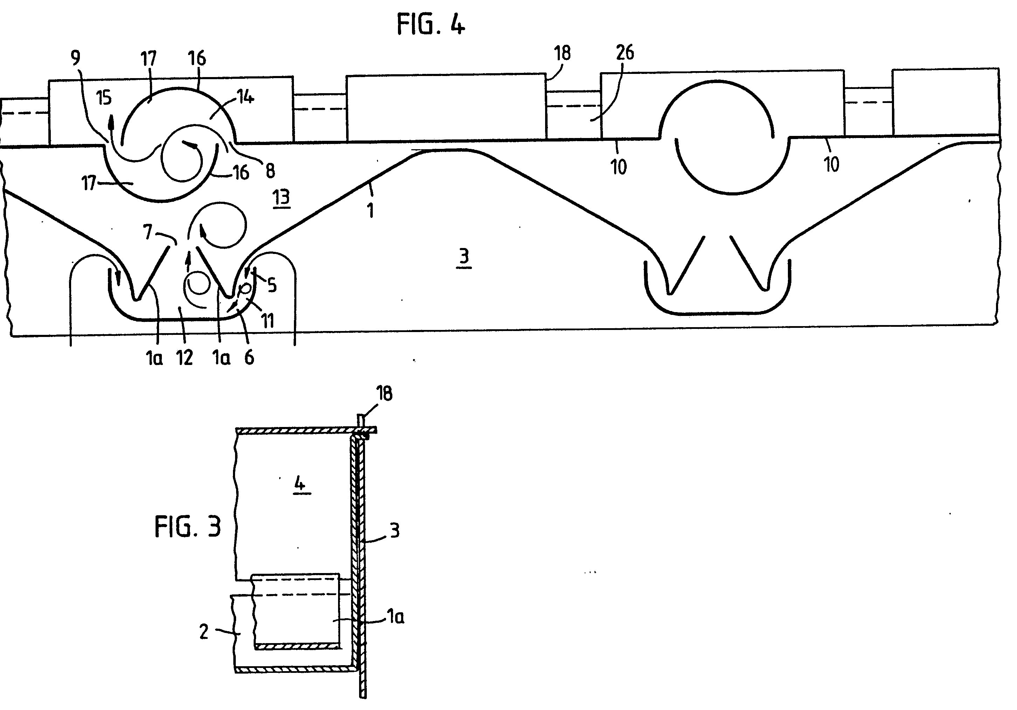

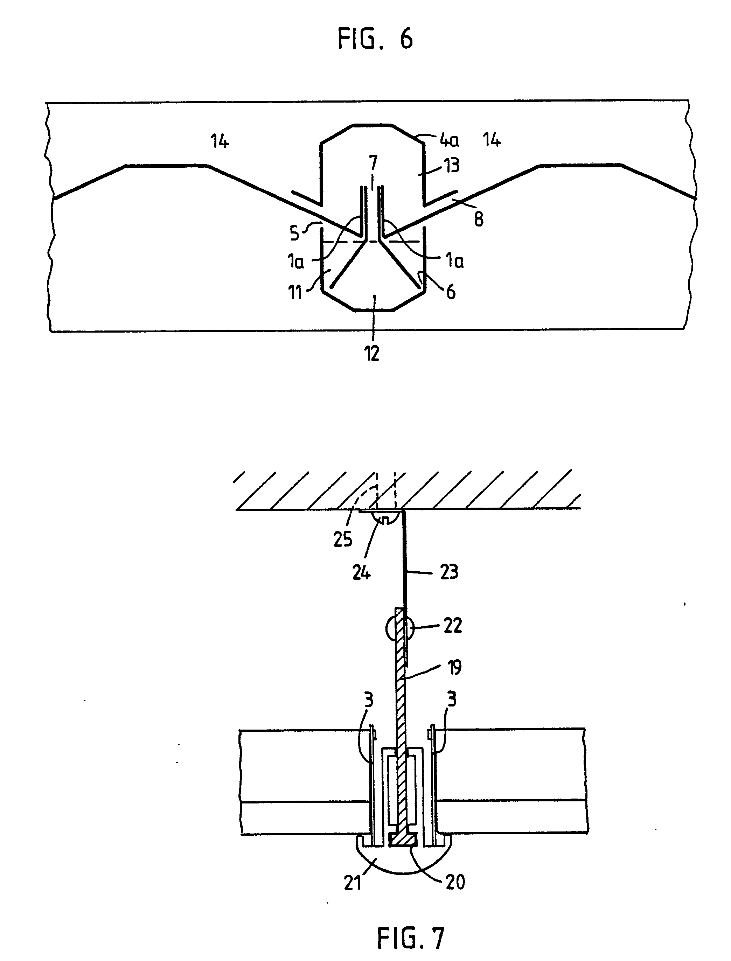

Oberhalb der Seitenrandpartien 1a jeweils zweier benachbarter Deckenelemente 1 sind zueinander parallel verlaufende, von den Querträgern 3 getragene Luftleitbleche vorgesehen. Die Luftleitbleche 4, 4a nach den Fig. 1, 2 bzw. 6 haben im Querschnitt im wesentlichen die Form eines umgekehrten U's. Die Luftleitbleche 10 nach der Fig. 4 bestehen aus einander identischen Kulissenblechen. Jedes Kulissenblech weist auf seinen Seitenrandpartien jeweils eine im Querschnitt kreisbogenförmige Kulisse 16 auf. Die zwei Kulissen jeweils zweier benachbarter Kulissenbleche weisen Öffnungen 17 auf, die einander entgegengesetzt, jedoch seitlich verschoben sind. Die zwei übereinander angeordneten Kulissen 16 liegen oberhalb der Seitenrandpartien 1a jeweils zweier benachbarter Deckenelemente 1. Die Ausführungsform der Luftleitbleche 4a nach der Fig. 6 unterscheidet sich lediglich von derjenigen nach der Fig. 2 dadurch, dass die Schenkel des umgekehrten U's abgewinkelt sind, so dass die abgewinkelten Endteile mit den übrigen Teilen der Schenkel einen scharften Winkel einschliessen.

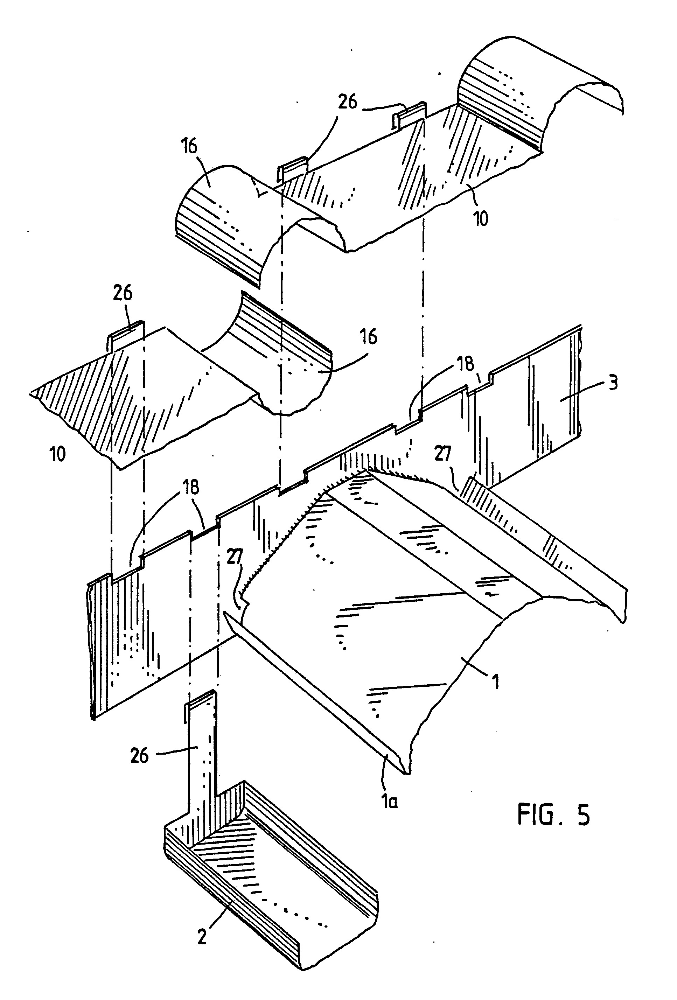

Die Luftleitbleche 4, 4a, 10 sind an den Querträgern 3 ebenfalls abnehmbar befestigt, so dass sie für die Reinigung, z. B. in Spülmaschinen, aus der Filterunterdecke einfach herausgenommen werden können. Dabei werden sowohl die Auffangrinnen 2 als auch die Luftleitbleche 4, 4a, 10, welche jeweils abgebogene Überlappungen 26 aufweisen, aus Salterungen 18 in den Querträgern 3 herausgenommen. Um das Herausnehmen der Überlappungen 26 der Auffangrinnen 2 aus den Halterungen 18 zu ermöglichen sind in den Deckenelementen 1 in ihren an den Querträgern 3 befestigten Randteilen Schlitze 27 vorgesehen (siehe die Fig. 5). Die Halterungen 18 sind so knapp bemessen, dass ein Verschieben während des Betriebes der Filterunterdecke nicht möglich ist. Beim Wiedereinsetzen der Auffangrinnen bzw. der Luftleitbleche nach der Reinigung kann kein Handhabungsfehler gemacht werden.

Die Deckenelemente 1, die Auffangrinnen 2 und die Luftableitbleche 4, 4a, 10 können aus Stahlblech, Aluminiumblech, Chromstahlblech oder Chromnickelstahlblech bestehen. Es ist von Vorteil, wenn diese Materialien teilweise oder gänzlich mit "Teflon" oder mit einem ähnlichen Kunststoff oder mit Email beschichtet sind. Eine solche Beschichtung bewirkt, dass die Reinigung mit äusserst wenig fettlöslichem Waschmittel hygienisch sauber erfolgt. Als weiteres Material kommt Kunststoff in Frage. Die mit Teflon beschichteten Bestandteile können auch nur mittels einer Brause abgespült werden, weil sich eine solche Beschichtung in der Praxis als besonders öl- und fettabstossend bewährt hat.

Die Deckenelemente 1, die Auffangrinnen 2 und die Luftableitbleche 4, 4a, 10 werden jeweils in einem Arbeitsgang als ein einziges Stück tiefgezogen. Nachdem die Deckenelemente 1 als ein einziges Stück tiefgezogen worden sind, wird jeweils im Bereich der zu bildenden Seitenendpartien 1a der Deckenelemente 1 ein Loch 18' ausgestanzt. Die Auffangrinnen 2 werden an ihren beiden Querseiten geschlossen. Durch diese Massnahme wird verhindert, dass das ausfiltrierte Kondensat aus den Auffangrinnen 2 herausfliesst oder beim Herausnehmen derselben zwecks Reinigung herausläuft.

Durch die aneinander angeordneten Auffangrinnen 2, Seitenrandpartien 1a der Deckenelemente 1 und der Luftableitbleche 4, 4a, 10 wird in der Filterunterdecke ein labyrinthähnliches System geschaffen, durch welches die Abluft geführt wird und in welchem sich verschiedene Ausscheide- und Niederschlagvorgänge abspielen. Wie aus den Fig. 2, 4 und 6 am besten ersichtlich ist, entstehen durch die Formgebung der Seitenrandpartien 1a, der Deckenelemente 1 und der Luftableitbleche 4, 4a, 10 auf dem Wege der Abluftströmung mehrere Verdichtungs- und Beruhigungszonen.

In Richtung der Abluftströmung entsteht eine erste Verdichtungszone 5 zwischen dem abgebogenen Teil der Seitenrandpartie 1a jedes Deckenelementes 1 und der Auffangrinne 2, eine erste Beruhigungszone 11 in dem sich erweiterten Raum zwischen dem abgebogenen Teil der Seitenrandpartie 1a und der Auffangrinne 2, eine zweite Verdichtungszone 6 zwischen der Spitze der Seitenrandpartie 1a jedes Deckenelementes 1 und der Auffangrinne 2, eine zweite Beruhigungszone 12 in dem sich erweiternden Teil zwischen den zueinander geneigten Schenkeln der Seitenrandpartien 1a zweier benachbarter Deckenelement 1, eine dritte Verdichtungszone 7 zwischen den zueinander zulaufenden Schenkeln der Seitenrandpartien 1a zweier benachbarter Deckenelement 1, eine dritte Beruhigungszone 13 in dem durch das Luftableitblech 4 abgeschlossenen Raum, eine vierte Verdichtungszone 8 zwischen dem Endbereich des Schenkels des umgekehrten U's des Luftableitbleches 4 und dem gewölbten Teil der Seitenrandpartie 1a jedes Deckenelementes 1 und eine vierte Beruhigungszone 14, die bei den Ausführungsformen nach den Fig. 2 und 6 den Deckenhohlraum darstellt. Bei der Ausführungsform nach der Fig. 4 sind es zusätzlich noch die Verdichtungszonen 9 beim Ausgang aus der durch die beiden Kulissen 16 gebildeten Beruhigungszone 14 und die Beruhigungszone 15, die den Deckenhohlraum darstellen. Bei den Ausführungsformen nach den Fig. 2 und 6 handelt es sich also um vier Verdichtungs- und vier Beruhigungszonen, wobei die Ausführung nach der Fig. 4 fünf Verdichtungs- und Beruhigungszonen aufweist. In Richtung der Abluftströmung ist abwechselnd eine Verdichtungszone und eine Beruhigungszone gebildet, wobei sich die Volumen der nacheinander folgenden Beruhigungszonen vergrössern.

Durch die Abkühlung der Abluft in den ihre Volumen nacheinander vergrössernden Beruhigungszonen, insbesondere in den, den Deckenhohlraum bildenden Beruhigungszonen 14, 15, wird das Restkondensat ausgeschieden. Je grösser das Volumen der Beruhigungszonen ist, desto wirkungsvoller ist die Ausscheidung und somit der Niederschlag von Schwebestoffen aus aufsteigender Abluft.

In der Fig. 7 ist ein Aufhängeprofil 19 dargestellt, das in einer Längsnut 20 eines Tragprofils eingeschoben ist. Mittels des Aufhängeprofils 19 und des Tragprofils 21 werden zwei benachbarte Querträger 3 gehalten, die die Filterunterdecken tragen. Mit 22 ist eine Niete bezeichnet, die das Aufhängeprofil 19 mit einem Aufhängeband 23 verbindet. Das Aufhängeband 23 ist mittels einer Schraube 24 befestigt, die in einem in der Decke eingesetzten Dübel 25 eingeschraubt ist.

Durch die Formgebung der Deckenelemente 1 sowie diejenige der Luftableitbleche 4, 4a, 10 wird erzielt, dass hinter jeder Verdichtungszone in der Beruhigungszone eine Wirbel- bzw. Zirkulationsströmung der Abluft entsteht. Durch die Wirbel- bzw. Zirkulationsströmung werden die Schwebestoffe der Abluft, wie Wasser-, Fett- und Ölteilchen ausgeschieden und in der Auffangrinne 2 bzw. in den Kulissen 16 niedergeschlagen. Die Formgebung der Deckenelemente 1 sowie der Luftableitbleche 4, 4a, 10 verhindert, dass bei einer überfüllten Auffangrinne 2 das mit der Abluft aufströmende Kondensat direkt, ohne ausgeschieden zu werden, in den Deckenhohlraum und von dort in den Lüftungskanal bzw. Wärmerückgewinnungsteil und Ventilator gelangt und diese Teile bzw. Geräte verschmutzt. Ebenfalls wird durch diese Formgebung z. B. bei Grossküchen ein Brandschutz erzielt, weil die aufsteigenden Flammen im Labyrinthsystem erstickt werden und somit nicht in den Deckenhohlraum bzw. in das Kanalsystem oder andere Räume gelangen.

**Patentansprüche**

1. Aufhängbare Filterunterdecke zum Ausscheiden und Niederschlagen von Schwebestoffen aus aufsteigender Abluft, mit einander identischen, waagrecht und zueinander parallel verlaufenden, gewölbten Deckenelementen (1) und einander identischen, ebenfalls zueinander parallel, jedoch im Abstand unterhalb von Seitenrandpartien (1a) jeweils zweier benachbarter Deckenelemente (1) verlaufenden Auffangrinnen (2), welche Deckenelemente (1) und Auffangrinnen (2) von Querträgern (3) getragen sind, dadurch gekennzeichnet, dass die Seitenrandpartien (1a) jedes Deckenelementes (1) im Querschnitt V-förmig gebildet sind und dass im Abstand oberhalb der Seitenrandpartien (1a) jeweils zweier benachbarter Deckenelemente (1) zueinander parallel verlaufende von den Querträgern (3) getragene Luftableitbleche (4, 4a, 10) vorgesehen sind, wodurch auf dem Wege der Abluftströmung mindestens vier Verdichtungs- (5, 6, 7, 8, 9) und Beruhigungszonen (11, 12, 13, 14, 15) entstehen, und dass sowohl die Luftableitbleche (4, 4a, 10) als auch die Auffangrinnen (2) an den Querträgern (3) abnehmbar befestigt sind.

2. Filterunterdecke nach Patentanspruch 1, dadurch gekennzeichnet, dass in Richtung der Abluftströmung hinter jeder Verdichtungszone (5, 6, 7, 8, 9) eine Beruhigungszone (11, 12, 13, 14, 15) gebildet ist, wobei sich die Volumen der nacheinander folgenden Beruhigungszonen (11, 12, 13, 14, 15) vergrössern.

3. Filterunterdecke nach Patentanspruch 1, dadurch gekennzeichnet, dass die Luftableitbleche (4, 4a) im Querschnitt im wesentlichen die Form eines umgekehrten U's haben.

4. Filterunterdecke nach Patentanspruch 1, dadurch gekennzeichnet, dass die Luftableitbleche (10) aus einander identischen Kulissenblechen bestehen, deren jedes auf seinen Seitenrandpartien jeweils eine im Querschnitt kreisbogenförmige Kulisse (16) aufweist, wobei die zwei Kulissen jeweils zweier benachbarter Kulissenbleche mit ihren Öffnungen (17) entgegengesetzt, jedoch seitlich verschoben oberhalb der Seitenrandpartien (1a) jeweils zweier benachbarter Deckenelemente (1) angeordnet sind.

5. Verfahren zur Herstellung der Filterunterdecke nach Patentanspruch 1, dadurch gekennzeichnet, dass die Deckenelemente (1), die Auffangrinnen (2) und die Luftableitbleche (4, 4a, 10) jeweils in einem Arbeitsgang als ein einziges Stück tiefgezogen werden, wobei jeweils ein Loch (18) im Bereich der zu bildenden Seitenrandpartien (1a) der Deckenelemente (1) ausgestanzt wird und die Auffangrinnen (2) an ihren Querseiten geschlossen werden.

**Claims**

1. Suspendable filter-subceiling for separating and depositing suspended matter from rising exhaust air, having arched ceiling elements (1) identical to one another, running horizontally and parallel to one another, collecting gutters (2) likewise running parallel to one another but spaced beneath side-edge portions (1a) of each two adjacent ceiling elements (1), which ceiling elements (1) and collecting gutters (2) are borne by transverse supports (3), characterized in that the side-edge portions (1a) of each ceiling element (1) are formed V-shaped in cross-section, and that spaced above the side-edge portions (1a) of each two adjacent ceiling elements (1), air baffles (4, 4a, 10) running parallel to one another and borne by the transverse supports (3) are provided, whereby at least four compression zones (5, 6, 7, 8, 9) and stilling zones (11, 12, 13, 14, 15) are formed on the path of the exhaust-air flow, and that both the air baffles (4, 4a, 10) and the collecting gutters (2) are removably fastened to the transverse supports (3).

2. Filter-subceiling according to patent claim 1, characterized in that a stilling zone (11, 12, 13, 14, 15) is formed behind each compression zone (5, 6, 7, 8, 9) in the direction of the exhaust-air flow, the volumes of the successive stilling zones (11, 12, 13, 14, 15) increasing.

3. Filter-subceiling according to patent claim 1, characterized in that the air baffles (4, 4a) have substantially the shape of an inverted U in cross-section.

4. Filter-subceiling according to patent claim 1, characterized in that the air baffles (10) consist of guide sheets identical to one another, each of which has on each of its side-edge portions a guide arcuate in cross-section, the two guides of each two adjacent guide sheets being disposed with their openings (17) opposite but laterally displaced above the side-edge portions (1a) of each two adjacent ceiling elements (1).

5. Process for producing the filter-subceiling according to patent claim 1, characterized in that the ceiling elements (1), the collecting gutters (2), and the air baffles (4, 4a, 10) are deep-drawn in one operation as a single piece in each case, a hole (18') being punched each time in the region of the side-edge portions (1a) of the ceiling elements (1) to be formed, and the collecting gutters (2) being closed at their transverse sides.

**Revendications**

1. Sous-plafond suspendu à filtre, pour la séparation et la décantation de matières en suspension dans un flux d'air ascendant, comprenant des éléments de plafond cintrés identiques déposés horizontalement, et en parallèle, à une distance en dessous des bords (1a) de deux éléments de plafond voisins, des coulisses de rassemblement (2) identiques entre elles et également parallèles, les éléments de plafond et les coulisses étant portés par des supports transversaux (3), caractérisé en ce que les côtés latéraux des parties marginales (1a) de chaque élément de plafond ont en coupe une forme en V, en ce que des tôles de déviation de l'air (4, 4a, 10) sont prévues au-dessus de chaque paire de parties marginales (1a) de deux éléments voisins, ces tôles étant situées à une distance au-dessus des dites parties, s'étendant parallèlement et étant portées par les supports transversaux, le tout de manière à ménager, le long du chemin de l'écoulement de l'air au moins quatre zones de concentration (5, 6, 7, 8, 9) et quatre zones de ralentissement (11, 12, 13, 14, 15) et en ce que les tôles de déviation de l'air (4, 4a, 10) de même que les coulisses de rassemblement sont fixées aux supports transversaux de manière amovible.

2. Sous-plafond selon la revendication 1, caractérisé en ce que derrière chaque zone de concentration (5, 6, 7, 8, 9) dans le sens de l'écoulement de l'air se trouve une zone de ralentissement (11, 12, 13, 14, 15), et en ce que les volumes des zones de ralentissement successives ont des valeurs croissantes.

3. Sous-plafond selon la revendication 1, caractérisé en ce que les tôles de déviation (4, 40) ont en coupe une forme en U renversé.

4. Sous-plafond selon la revendication 1, caractérisé en ce que les tôles de déviation d'air (10) se composent d'éléments identiques présentant sur chacun de leurs bords latéraux une partie arquée en forme de coulisse (16), chacune des deux parties arquées de chaque élément se trouvant disposée en regard d'une partie arquée d'un élément voisin placée dans une position opposée mais décalée, au-dessus des parties marginales adjacentes, de deux éléments de plafond voisins.

5. Procédé pour la fabrication de sous-plafonds à filtres selon la revendication 1, caractérisé en ce que les éléments de plafond (1), les coulisses de rassemblement (2) et les tôles de déviation de l'air (4, 4a, 10) sont pour chacun d'eux embouties en une opération et d'une pièce, en ce qu'un trou (18) est découpé dans chaque zone dont est formée une partie marginale (1a) de chaque élément de sous-plafond (1), et en ce que les coulisses de rassemblement (2) sont fermées à leurs extrémités.

## FIG. 1

## FIG. 2

FIG. 4

FIG. 3

0 148 289

FIG. 5

# FIG. 6

# FIG. 7